(19) Europäisches Patentamt
European Patent Office
Office européen des brevets

(11) **EP 4 383 154 A1**

(12) **EUROPEAN PATENT APPLICATION**

(43) Date of publication:
**12.06.2024 Bulletin 2024/24**

(21) Application number: **23209001.9**

(22) Date of filing: **10.11.2023**

(51) International Patent Classification (IPC):
**G06N 20/00** (2019.01)

(52) Cooperative Patent Classification (CPC):
**G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.12.2022 JP 2022197473**

(71) Applicant: **FUJITSU LIMITED**
**Kawasaki-shi, Kanagawa 211-8588 (JP)**

(72) Inventors:
• **YAMAMOTO, Tatsuya**
**Kawasaki-shi, Kanagawa, 211-8588 (JP)**
• **NITTA, Izumi**
**Kawasaki-shi, Kanagawa, 211-8588 (JP)**
• **OHASHI, Kyoko**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **ARTIFICIAL INTELLIGENCE (AI) SYSTEM CHECK PROGRAM, AI SYSTEM CHECK METHOD, AND INFORMATION PROCESSING DEVICE**

(57) An artificial intelligence(AI) system check program comprising instructions which when executed by a computer, cause the computer to execute processing including: acquiring a plurality of pieces of relational information that each includes at least two attributes among the attributes of a class of an object person, the attributes of the class of processing, and the attributes of the class of data, in which the relational information is determined based on a configuration of an AI system; designating priority of the plurality of pieces of relational information, based on whether or not each of the plurality of pieces of relational information is correlated with merging of the data; and outputting one or a plurality of check items selected based on the designated priority from among a plurality of check items each associated with the attributes, as a checklist for the AI system.

FIG. 6

EP 4 383 154 A1

**Description**

FIELD

The embodiments discussed herein are related to an AI system check program, an AI system check method, and an information processing device.

BACKGROUND

In artificial intelligence (AI) systems, ethical risk assessments are sometimes performed.

Use of AI systems for various types of industry and tasks sometimes causes ethical issues. If such an issue arises, it will have a great impact not only on companies or organizations that provided the AI system, but also on users of the AI system and society beyond.

Therefore, in social implementation of AI, efforts are being made so as to enable to recognize and deal with ethical risks.

However, as AI systems have a plurality of stakeholders and social circumstances surrounding the stakeholders change, it may not be easy in some cases to perceive what ethical issues may arise from the use of AI systems.

Therefore, the very checklists presented by principles and guidelines regarding AI ethics are sometimes applied to the AI systems and their stakeholders and analyzed.

Examples of the principles and guidelines regarding AI ethics include "European High-Level Expert Group on AI (AI HLEG) "Ethics Guidelines for Trustworthy AI"", "Ministry of Internal Affairs and Communications AI Utilization Guidelines", "Integrated Innovation Strategy Promotion Council "Human-centered AI Social Principles"", and "OECD "Recommendation of the Council on Artificial Intelligence"".

In addition, "risk chain models (RCModels)" have been proposed as models helpful for AI service providers to examine risk control relating to their own AI services in accord with the existence of various forms of AI service provision.

In a risk chain model, risk constituent elements are organized and structured according to (1) to (3) below.

Technical constituent elements of AI system

(2) Constituent elements relating to service provider's code of conduct (including communication with users)
(3) Constituent elements relating to user understanding, behavior, and usage environment

In addition, in the risk chain model, identification of risk scenarios and specification of constituent elements that become risk factors, and visualization of risk chains and examination of risk control are performed. In the visualization of risk chains and the examination of risk control, the AI service providers become able to examine stepwise risk reduction by visualizing relationships (risk chains) of the constituent elements related to the risk scenarios.

Examples of the related art include: International Publication Pamphlet No. WO 2021/199201; Japanese Laid-open Patent Publication No. 2021-057047; U.S. Patent Publication No. 2020/0097849 are disclosed as related art; and Matsumoto, Takashi, Ema, Arisa, "Proposal of risk chain model to study risk reduction for AI services", June 4, 2020, the Internet <URL: ifi.u-tokyo.ac.jp/wp/wp-content/uploads/2020/06/policy_recommendation tg 20200604.pdf> is also disclosed as related art.

SUMMARY

TECHNICAL PROBLEM

However, the checklists presented by the principles and guidelines do not specifically indicate what part of the AI system is supposed to be how, and AI system developers or providers have to materialize the checklists. This materialization work is highly difficult and also imposes a large burden of person-hours.

In addition, although the risk constituent elements are organized in the risk chain models, the AI system providers and developers have to put the risk constituent elements into items supposed to be practiced for AI system components and individual stakeholders.

Furthermore, in a case where the configuration of the AI system is updated, the ethical risk that can arise from servicing of the AI system is also subjected to re-examination, and there is a possibility that the ethical risk may not be efficiently recognized.

In one aspect, an object is to support AI system developers and providers in appropriately recognizing and dealing with ethical risks that can arise from servicing of AI systems.

SOLUTION TO PROBLEM

According to an aspect of the embodiments, there is provided an artificial intelligence(AI) system check program comprising instructions which when executed by a computer, cause the computer to execute processing including: acquiring a plurality of pieces of relational information that each includes at least two attributes among the attributes of a class of an object person, the attributes of the class of processing, and the attributes of the class of data, in which the relational information is determined based on a configuration of an AI system; designating priority of the plurality of pieces of relational information, based on whether or not each of the plurality of pieces of relational information is correlated with merging of the data; and outputting one or a plurality of check items selected based on the designated priority from among a plurality of check items each associated with the attributes, as a checklist for the AI system.

ADVANTAGEOUS EFFECTS OF INVENTION

In one aspect, AI system developers and providers may be supported in appropriately recognizing and dealing with ethical risks that can arise from servicing of AI systems.

BRIEF DESCRIPTION OF DRAWINGS

FIG. 1 is a block diagram illustrating a first example of an analysis object system diagram;
FIG. 2 (i.e., FIGs. 2A and 2B) is a diagram illustrating an example of generating a graph structure from an analysis sheet according to a related example;
FIG. 3 is a block diagram schematically illustrating a software configuration example of an information processing device according to the related example;
FIG. 4 is a flowchart explaining an output process for a prioritized checklist according to the related example;
FIG. 5 is a flowchart explaining details of a generation process for an AI ethics checklist according to the related example;
FIG. 6 is a flowchart explaining an output process for a prioritized checklist according to an embodiment;
FIG. 7 is a diagram explaining qualitative characteristics of characteristics of changes in risk concerning AI ethics according to the embodiment;
FIG. 8 is a diagram explaining quantitative characteristics and extraction of characteristics of changes in risk concerning AI ethics according to the embodiment;
FIG. 9 is a diagram explaining an AI ethical risk determination process using a data index according to the embodiment;
FIG. 10 is a first diagram explaining definitions of nodes and interactions according to the embodiment;
FIG. 11 is a second diagram explaining definitions of nodes and interactions according to the embodiment;
FIG. 12 is a block diagram schematically illustrating a software configuration example of an information processing device according to the embodiment;
FIG. 13 is a flowchart explaining details of a generation process for an AI ethics checklist according to the embodiment;
FIG. 14 (i.e., FIGs. 14A and 14B) is a diagram explaining a first example of a generation process for a graph structure from an analysis sheet according to the embodiment;
FIG. 15 is a diagram explaining a first example of prioritization of risks for interactions according to the embodiment;
FIG. 16 is a block diagram illustrating a second example of an analysis object system diagram;
FIG. 17 (i.e., FIGs. 17A, 17B, and 17C) is a diagram explaining a second example of a generation process for a graph structure from an analysis sheet according to the embodiment;
FIG. 18 is a diagram explaining a second example of prioritization of risks for interactions according to the embodiment; and
FIG. 19 is a block diagram schematically illustrating a hardware configuration example of the information processing device according to the embodiment.

DESCRIPTION OF EMBODIMENTS

[A] Related Example

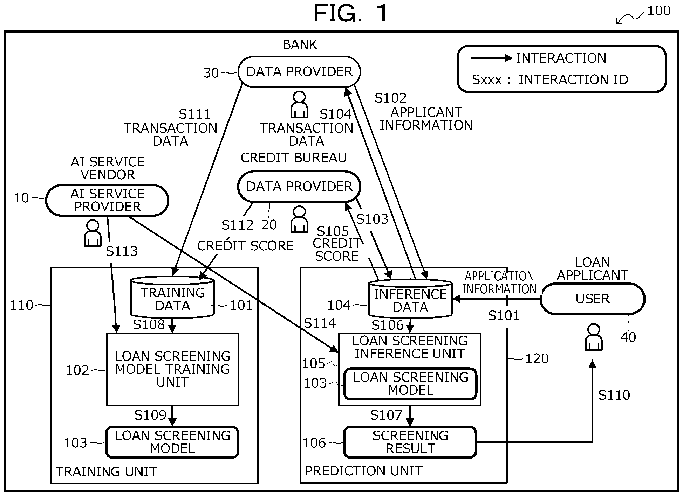

FIG. 1 is a block diagram illustrating a first example of an analysis object system diagram.

In a related example, ethical characteristics that an AI system 100 is supposed to have are made into a checklist in association with relationships between the AI system 100 and stakeholders, and ethical risks of the AI system 100 are analyzed using that AI ethics checklist. This may remove the work expected for an AI service provider 10 and developers to put the ethical characteristics into items supposed to be practiced for components of the AI system 100 and individual stakeholders.

In addition, the relationships between the constituent elements of the AI system 100 and the stakeholders are formed into a graph structure, and an AI ethics checklist in which AI ethics check items are prioritized based on characteristics of the graph structure is automatically generated. This may achieve improvement in efficiency by analyzing important AI ethics check items on a priority basis.

The AI system 100 illustrated in FIG. 1 illustrates interactions of loan screening AI. The arrows in FIG. 1 indicate interactions. Tow ends (start point and end point) of an interaction can be any elements of stakeholders, data, or components of the AI system. The type of the interaction is specified by roles (a data provider 20 or 30, a user 40, training data 101, a loan screening model 103, or the like) of the elements corresponding to the start point and end point of the interaction. Sxxx given to each interaction indicates an interaction identifier (ID).

The AI system 100 is used by the AI service provider 10 such as an AI service vendor, the data provider 20 such as a credit bureau, the data provider 30 such as a bank, and the user 40 such as a loan applicant.

A training unit 110 includes a loan screening model training unit 102 (in other words, a machine learning unit) that executes training of the loan screening model 103 (in other words, an AI model) by machine learning for the training data 101. The training data 101 may be generated by an input of a credit score from the data provider 20 and an input of transaction data from the data provider 30.

A prediction unit 120 includes an inference unit 105 that outputs a screening result 106 (in other words, an inference result) by inferring inference data 104 using the loan screening model 103. The inference data 104 may be generated by an input and an output of a credit score from the data provider 20, an input and an output of application information and transaction data from the data provider 30, and an input of applicant information from the user 40.

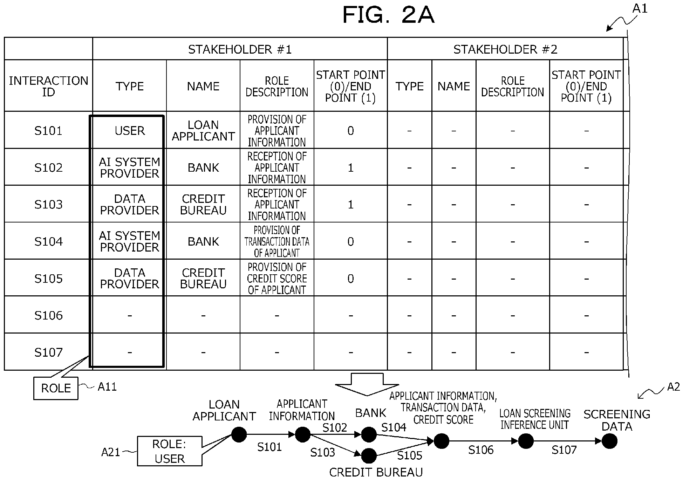

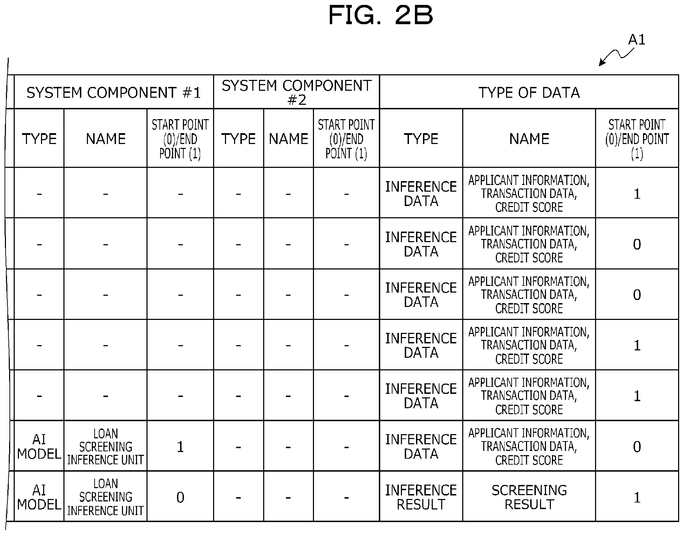

FIG. 2 (i.e., FIGs. 2A and 2B) is a diagram illustrating an example of generating a graph structure from an analysis sheet according to the related example.

In the analysis sheet indicated by the reference sign A1, the type, name, role description, distinction between the start point and the end point of the stakeholders, and the type, name, distinction between the start point and the end point, and the like of the data are associated with each other for each interaction ID.

For example, the interaction ID "S101" is associated with the type "user", the name "loan applicant", the role description "provision of applicant information", and the distinction between the start point and the end point "0 (start point)" of a stakeholder. In addition, the interaction ID "S101" is associated with the data type "inference result", the data name "applicant information (the transaction data and the credit score)", and the distinction between the start point and end point "1 (end point)".

Here, an AI ethical risk analysis process according to the related example will be described.

The risk analysis is conducted according to the following procedure from (1) to (4).

Relationships between the constituent elements of the AI system 100, data, and stakeholders are drawn as a system diagram (see FIG. 1), and interactions are extracted.

(2) Breakdown of each interaction is described in the analysis sheet (see the reference sign A1 in FIG. 2).

(3) For each item of the AI ethics checklist (not illustrated) generated based on the AI ethics model, a risk (a risk event and a risk factor) presumed from a state in which the relevant interaction does not satisfy its check item is extracted and described in the analysis sheet. Note that the AI ethics model is obtained by organizing principles, guidelines, and the like regarding AI ethics and configuring the organized principles, guidelines, and the like as a list of check items that the AI system 100 is supposed to satisfy.

(4) The risks in the analysis sheet are referred to, risks with the same contents are organized, and a relationship between an event and a factor is described. When visualized, an analysis diagram (not illustrated) is created by adding the risk event and factor to the system diagram.

That is, the system diagram, analysis sheet, and analysis diagram are output as output data.

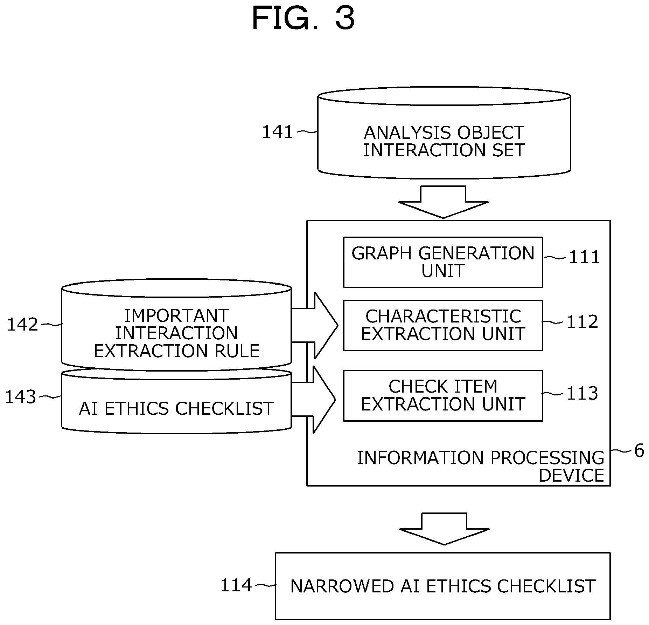

In the above-described risk analysis procedure (3), there are many items in the AI ethics checklist, and thus the person-hours for verifying the entire checklist are large. Therefore, for the above-described risk analysis procedure (3), a generation process for an AI ethics checklist with priority is executed by an information processing device 6 (to be described later with reference to FIG. 3).

In the AI ethics checklist generation process, a relationship (interaction) between any two parties among the analysis object AI system 100 and the stakeholders is expressed in a graph structure by the information processing device 6. Then, relationships (interactions) with high importance to ethically pay attention to are extracted on a rule basis according to characteristics of the graph structure, and the check items for extracting ethical risks linked with the relationships (interactions) with high importance are presented by the information processing device 6 as the checklist with priority.

The information processing device 6 according to the related example conducts narrowing down of the AI ethics checklist. In narrowing down the AI ethics checklist, characteristics that the "relationships between the configuration of the AI system and the stakeholders" have are expressed as the characteristics of the graph structure constituted by a set of interactions.

Since table data of the analysis sheet is in a data format of "interaction set", the graph structure can be automatically generated. For example, the following can be automatically extracted as the characteristics of the graph structure.

The number of nodes of the stakeholders
The number of stakeholders having a plurality of roles
The number of stakeholders who are not directly involved with the AI system

The characteristics of the graph structure that are likely to cause ethical risks to arise and the items of the AI ethics checklist that are supposed to be taken into account are registered as rules in advance. For example, in a case where there is one or more stakeholders who are not directly involved with the AI system 100, the priority of the interaction involving with those stakeholders is raised. This is to grasp indirect impact on the stakeholders that tend to be overlooked in design and development of the AI system 100.

The AI ethics check items with high importance are narrowed down, based on the rules registered according to the characteristics of the graph structure, and are generated as the AI ethics checklist with priority.

A graph structure as indicated by the reference sign A2 may be generated from the analysis sheet indicated by the reference sign A1 in FIG. 2.

In the graph structure indicated by the reference sign A2, an arrow between separate nodes indicated by the circle marks represents an interaction.

In the example illustrated in FIG. 2, the output of the applicant information from the loan applicant is represented by S101, the input of the applicant information to the bank is represented by S102, and the input of the applicant information to the credit bureau is represented by S103. In addition, the output of the applicant information, transaction data, and credit score from the bank is represented by S104, and the output of the applicant information, transaction data, and credit score from the credit bureau is represented by S105. Furthermore, the input of the applicant information, transaction data, and credit score to a loan screening inference unit is represented by S106, and the output of screening data from the loan screening inference unit is represented by S107.

As indicated by the reference sign A11, a role (the type of the stakeholder) is registered for each of the stakeholders, and as indicated by the reference sign A21, each node such as a loan applicant has a role.

Here, the information processing device 6 (to be described later with reference to FIG. 3) extracts an interaction with high importance to pay attention to in the following order of (1) to (3).

The importance of all the interactions is set to one point.

(2) The importance of an interaction with a specified characteristic is added (one point may be added for one characteristic).

(3) The interactions are ranked by importance.

The specified characteristic in (2) above may include a characteristic of nodes at the two ends of the interaction (components of the AI system 100, data, or stakeholders) and a characteristic of a coupling relationship. The characteristic of nodes at the two ends of the interaction may include a stakeholder having a plurality of roles (the AI system provider who is also the data provider), a stakeholder having a role of a user, and a stakeholder having a role of a training data provider. The characteristic of the coupling relationship may include an interaction of a stakeholder not connected to the output of the AI system 100, and an interaction in which the training data or the inference data is connected to a plurality of data providers.

FIG. 3 is a block diagram schematically illustrating a software configuration example of the information processing device 6 according to the related example.

The information processing device 6 according to the related example functions as a graph generation unit 111, a characteristic extraction unit 112, and a check item extraction unit 113.

The graph generation unit 111 acquires a plurality of pieces of relational information (in other words, interactions) including at least two attributes among an attribute of a class of an object person, an attribute of a class of processing, and an attribute of a class of data, which are determined based on the configuration of the AI system 100. The graph generation unit 111 may acquire the relational information, based on an analysis object interaction set 141. The graph generation unit 111 may generate the graph structure illustrated in FIG. 2, based on the acquired relational information.

The characteristic extraction unit 112 designates the priority of the plurality of pieces of relational information, based on the attribute of the class of the object person. The characteristic extraction unit 112 may designate the priority, based on an important interaction extraction rule 142. The characteristic extraction unit 112 may raise the priority of a specified object person having a relationship with each of the plurality of pieces of relational information. The characteristic extraction unit 112 may raise the priority of specified relational information among the plurality of pieces of relational information.

The check item extraction unit 113 outputs one or a plurality of check items selected based on the designated priority from among a plurality of check items each associated with an attribute, as a narrowed AI ethics checklist 114 of the AI system 100.

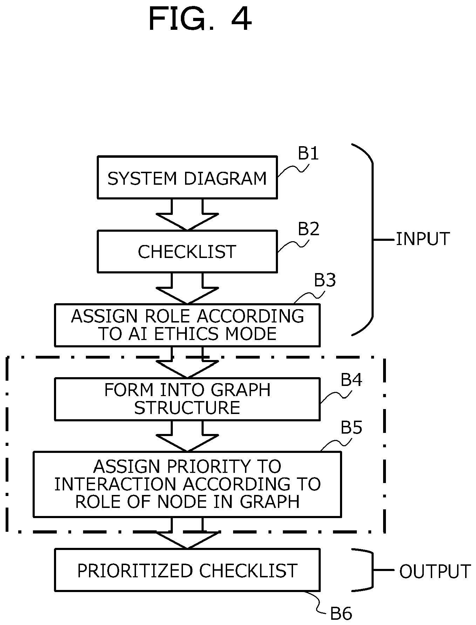

The output process for the prioritized checklist according to the related example will be described with reference to the flowchart (steps B1 to B6) illustrated in FIG. 4.

The graph generation unit 111 accepts an input of a system diagram of the AI system 100 illustrated in FIG. 1 (step B1). In the system diagram of the AI system 100, AI components and interactions of the stakeholders are described.

The graph generation unit 111 accepts an input of a checklist (step B2). The checklist is generated by extracting all the interactions from the system diagram. The checklist is a list for extracting a risk for each interaction and automatically extracts a related "ethical viewpoint" using an "AI ethics model".

The graph generation unit 111 assigns a role according to the AI ethics model to the checklist (step B3).

The graph generation unit 111 forms the checklist into a graph structure as illustrated in FIG. 2 (step B4).

The characteristic extraction unit 112 assigns priority to the interaction according to the role of the node in the graph structure (step B5). Conceivable "risk factors and risk events" are extracted for each checklist item.

Then, the check item extraction unit 113 outputs the checklist with priority (step B6). The "risk factors and risk events" are grouped, and the organized risks are drawn in the system diagram.

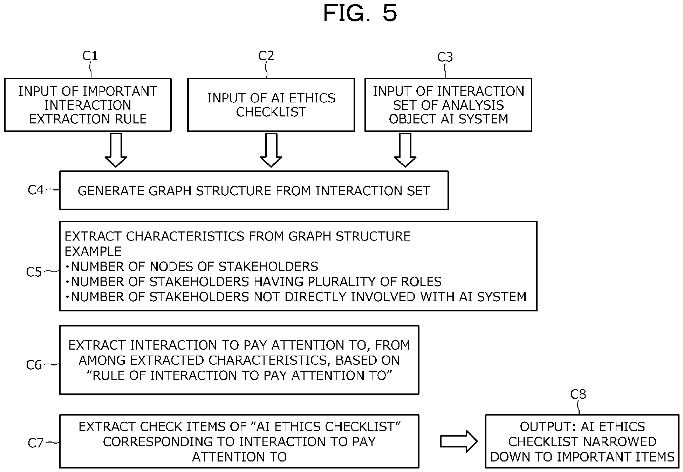

Next, details of the generation process for the AI ethics checklist according to the related example will be described with reference to the flowchart (steps C1 to C8) illustrated in FIG. 5.

The graph generation unit 111 accepts the important interaction extraction rule 142, an AI ethics checklist 143, and the analysis object interaction set 141 as input data (steps C1 to C3).

The graph generation unit 111 generates the graph structure from the interaction set 141 (step C4).

The characteristic extraction unit 112 extracts characteristics from the graph structure (step C5). The extraction of characteristics may be executed based on the number of nodes of the stakeholders, the number of stakeholders having a plurality of roles, and the number of stakeholders not directly involved with the AI system 100, for example.

The characteristic extraction unit 112 extracts an interaction to pay attention to, from among the extracted characteristics, based on the important interaction extraction rule 142 (step C6).

The check item extraction unit 113 extracts the check items of the AI ethics checklist 143 corresponding to the interaction to pay attention to (step C7).

The check item extraction unit 113 outputs the AI ethics checklist 143 narrowed down to important items (step C8). Then, the generation process for the AI ethics checklist 143 ends.

[B] Embodiment

Hereinafter, an embodiment will be described with reference to the drawings. Note that the embodiment to be described below is merely an example, and there is no intention to exclude application of various modifications and techniques not explicitly described in the embodiment. That is, the present embodiment can be variously modified and carried out in a range without departing from the spirit of the embodiment. In addition, each drawing is not intended to include only the constituent elements illustrated in the drawing and can include another function and the like.

In the related example described above, in the generation process for the AI ethics checklist, priority is assigned to the interaction according to the rule of the characteristics (such as characteristics regarding the roles of the stakeholders as an example) of the graph structure that are regarded as important interactions in which an ethical risk is likely to arise, and the AI ethics checklist is narrowed down.

Meanwhile, in the embodiment, priority is assigned to the interaction according to, in addition to the roles of the stakeholders, changes in features of data. Specifically, a graph structure is extracted from the checklist, and the role of the stakeholder and a change in data (for example, a relationship between indexes of data or the whole data) until the input to the AI system 100 are observed, whereby AI ethical risks are scored, and the checklist is prioritized.

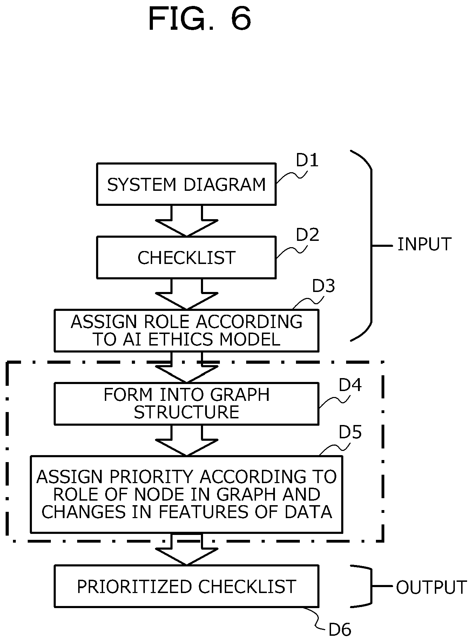

The output process for the prioritized checklist according to the embodiment will be described with reference to the flowchart (steps D1 to D6) illustrated in FIG. 6.

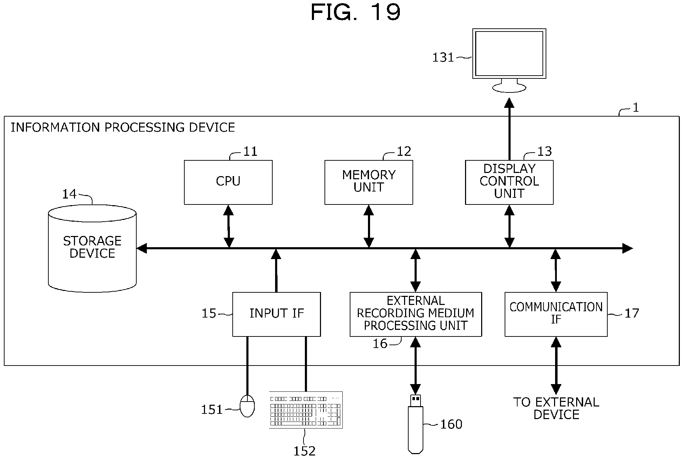

The system diagram of the AI system 100 illustrated in FIG. 1 is input to an information processing device 1 (to be described later with reference to FIG. 19) (step D1). In the system diagram of the AI system 100, AI components and interactions of the stakeholders are described.

The information processing device 1 accepts an input of the checklist (step D2). The checklist is generated by extracting all the interactions from the system diagram. The checklist is a list for extracting a risk for each interaction and automatically extracts a related "ethical viewpoint" using an "AI ethics model".

The information processing device 1 assigns a role to the checklist according to the AI ethics model (step D3).

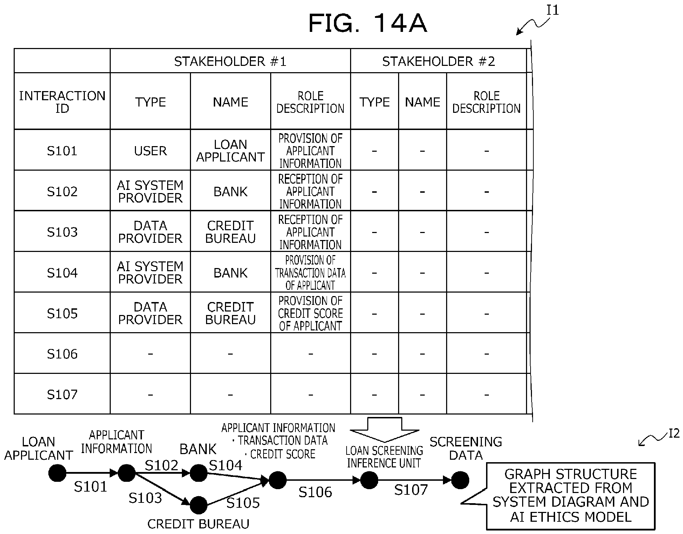

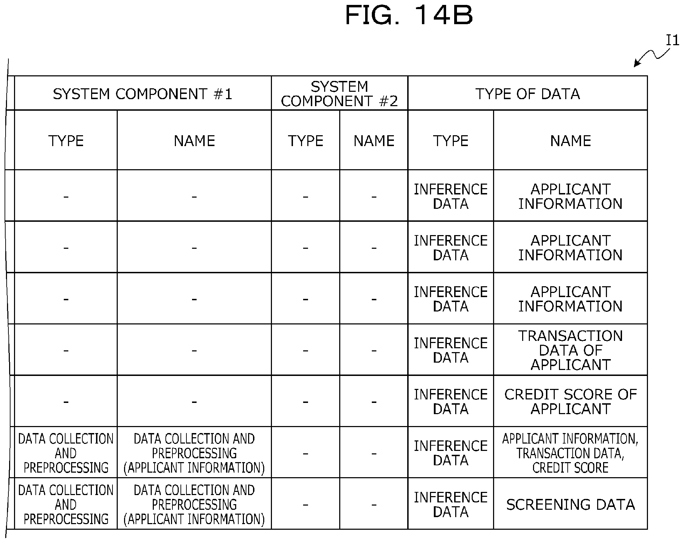

The information processing device 1 forms the checklist into a graph structure as will be described later with reference to FIG. 14 and the like (step D4).

The information processing device 1 assigns priority to the interaction according to the role of the node in the graph structure and changes in features of the data (step D5). Conceivable "risk factors and risk events" are extracted for each checklist item.

Then, the information processing device 1 outputs the checklist with priority (step D6). The "risk factors and risk events" are grouped, and the organized risks are drawn in the system diagram.

In the system diagram of the AI system 100 illustrated in FIG. 1, a possessor (in other words, an owner) exists for each piece of data exchanged by the interaction. In the example illustrated in FIG. 1, data is directly transmitted to the AI service provider 10.

In the embodiment, attention is paid to the property that the probability of causing an AI ethical risk rises when the characteristics of the data change between before and after the transfer, and furthermore, the data is likely to change when a stakeholder is interposed.

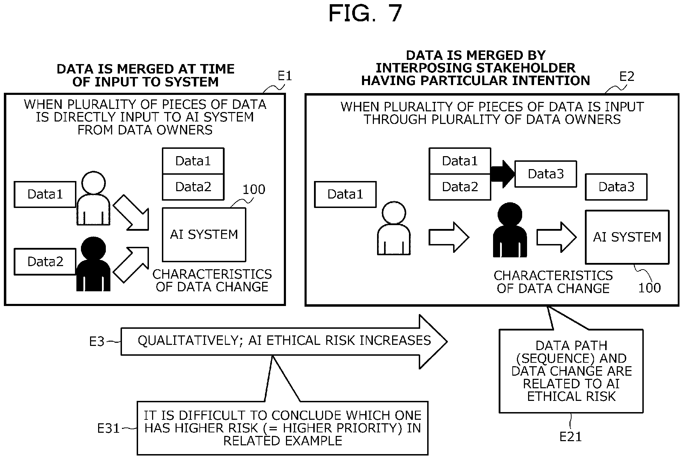

FIG. 7 is a diagram explaining qualitative characteristics of characteristics of changes in risk concerning AI ethics according to the embodiment.

As indicated by the reference sign E1, when a plurality of pieces of data is directly input to the AI system 100 from the data owners, the data is merged at the time of input to the system. In the example indicated by the reference sign E1, when Data1 and Data2 are input to the AI system 100 separately from each data owner, Data1 and Data2 are merged, and the characteristics of the data change.

As indicated by the reference sign E2, when a plurality of pieces of data is input to the AI system 100 through a plurality of data owners, the data is merged by interposing a stakeholder having a particular intention. In the example indicated by the reference sign E2, Data1 is transmitted from a first stakeholder to a second stakeholder, Data1 received by the second stakeholder and Data2 held by the second stakeholder are merged to generate Data3, and the generated Data3 is input to the AI system 100, whereby the characteristics of the data change. As indicated by the reference sign E21, the data path (in other words, the sequence) and the data change are related to the AI ethical risk.

In the example indicated by the reference sign E2 in which the data is merged by interposing a stakeholder having a particular intention, the AI ethical risk qualitatively increases as indicated by the reference sign E3, as compared with the example indicated by the reference sign E1 in which the data is merged at the time of input to the system. However, as indicated by the reference sign E31, it is difficult to conclude which one of the example indicated by the reference sign E1 and the example indicated by the reference sign E2 has a higher risk (= in other words, higher priority) in the above-described related example.

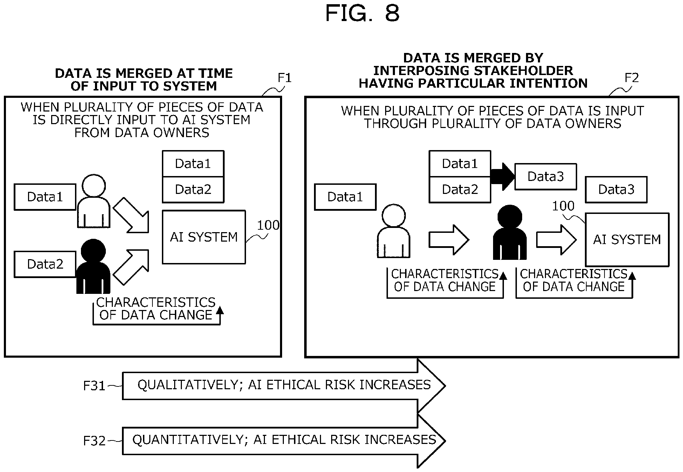

FIG. 8 is a diagram explaining quantitative characteristics and extraction of characteristics of changes in risk concerning AI ethics according to the embodiment.

As indicated by the reference sign F1, when a plurality of pieces of data is directly input to the AI system 100 from the data owners, the data is merged at the time of input to the system. In the example indicated by the reference sign F1, when Data1 and Data2 are input to the AI system 100 separately from each data owner, Data1 and Data2 are merged, and the characteristics of the data change.

As indicated by the reference sign F2, when a plurality of pieces of data is input to the AI system 100 through a plurality of data owners, the pieces of data are merged by interposing a stakeholder having a particular intention. In the example indicated by the reference sign E2, the characteristics of the data change when Data1 is transmitted from the first stakeholder to the second stakeholder. Furthermore, Data1 received by the second stakeholder and Data2 held by the second stakeholder are merged to generate Data3, and the generated Data3 is input to the AI system 100, whereby the characteristics of the data change.

For the change in the characteristic of the data, the risk pertaining to responsibility may be measured by the relationship between the indexes of the data and the degree of distribution and bias of the data. Whether or not there is a change and the degree of change (change in variance, median, or the like) may be concluded by setting an indicator.

In the example indicated by the reference sign F2 in which the data is merged by interposing a stakeholder having a particular intention, the AI ethical risk qualitatively increases as indicated by the reference sign F31, as compared with the example indicated by the reference sign F1 in which the data is merged at the time of input to the system. In addition, in the example indicated by the reference sign F2 in which the data is merged by interposing a stakeholder having a particular intention, the AI ethical risk quantitatively increases as indicated by the reference sign F32 when supposing that the change or bias in the example indicated by the reference sign F2 is large, as compared with the example indicated by the reference sign F1 in which the data is merged at the time of input to the system.

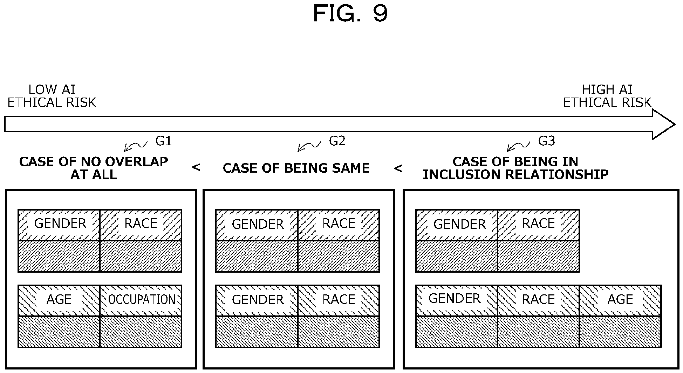

FIG. 9 is a diagram explaining an AI ethical risk determination process using a data index according to the embodiment.

In the reference signs G1 to G3 in FIG. 9, the upper data and the lower data indicate that each is an object to be merged.

In the example indicated by the reference sign G1, the upper data is constituted by gender and race, the lower data is constituted by age and occupation, and the elements of the upper data and the elements of the lower data do not overlap at all.

In the example indicated by the reference sign G2, the upper data is constituted by gender and race, the lower data is also constituted by gender and race, and the elements of the upper data and the elements of the lower data are the same.

In the example indicated by the reference sign G3, the upper data is constituted by gender and race, the lower data is constituted by gender, race, and age, and the upper data is in an inclusion relationship with the lower data.

In the case indicated by the reference sign G2 in which the data is the same, the AI ethical risk is higher than the AI ethical risk in the case indicated by the reference sign G1 in which the data does not overlap at all. In addition, in the case indicated by the reference sign G3 in which the data has an inclusion relationship, the AI ethical risk is higher than the AI ethical risk in the case indicated by the reference sign G2 in which the data is the same. The reason why the risk is higher when the data is in an inclusion relationship than when the data is the same is that causing the risk pertaining to combination is more possible.

As described above, the magnitude of the AI ethical risk can be qualitatively characterized by the relationships of the indexes of the sensitive attributes between pieces of data to be merged.

When data includes a sensitive attribute, including the sensitive attribute itself poses a risk. The risk depends on the number of sensitive attributes. From the viewpoint of AI ethics, there is no case where the risk is zero, and the risk usually has one or more. Whether the risk is simply linearly proportional or exponential depends on the data.

The handling of the sensitive attribute when merging a plurality of pieces of data with each other changes depending on the presence or absence of the same type of (in other words, the same) attributes between pieces of data. When having the same type of (the same) attributes, an AI ethical risk arises, and not only the amount of data increases but also there is a possibility that the quality of data may change. On the other hand, when not having the same type of (the same) attributes, the risk is low from the viewpoint of AI ethics, and the amount of data merely increases.

The probability of causing an AI ethical risk rises higher as the features change more greatly until the data that the stakeholder in the system diagram of the AI system 100 has is input to the AI system 100. A change in overall data trends, as well as a change in sensitive attributes of data, when the data is merged can possibly cause bias in fairness, or the like. A change in the type of the sensitive attribute or a change in the amount of data for each sensitive attribute can possibly cause a change in features of the data.

When the stakeholder is a data provider, a change in data further produce a relation with the AI ethical risk.

The probability of causing an AI ethical risk rises higher as data has a larger number of times the stakeholders are interposed. When data is aggregated by a specified stakeholder, there is a possibility that a risk attributable to an aggregation policy or a risk attributable to an aggregation method may be produced.

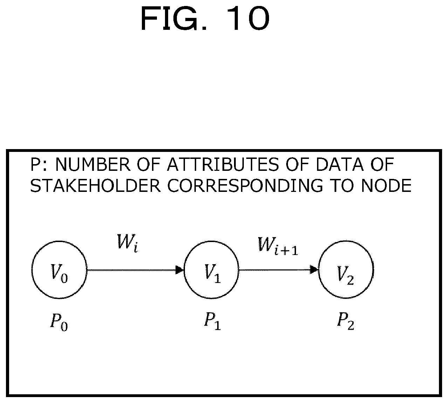

FIG. 10 is a first diagram explaining definitions of nodes and interactions according to the embodiment.

With a graph structure (in other words, the topology) and data of the system diagram of the AI system 100 as inputs, an indicator value that defines the priority may be calculated based on the role that the node has and a change in data between nodes as a sequence. For the data, determination can be made only with the index of the table.

In the example illustrated in FIG. 10, the interaction from a node $V_0$ to a node $V_1$ is represented by $W_i$, and the interaction from the node $V_1$ to a node $V_2$ is represented by $W_{i+1}$. In addition, the number of attributes of data of the stakeholders corresponding to the nodes $V_0$, $V_1$, and $V_2$ is represented by $P_0$, $P_1$, and $P_2$, respectively.

When N is assumed to be the number of nodes in the sequence, a data change indicator $G_N$ may be expressed by following (mathematical formula 1). The first term represents the data change indicator of an individual interaction, the second term represents a role of a stakeholder, and the third term is a correction term.

[Mathematical Formula 1]

$$G_N = \sum_i^N W_i + \sum_i^N X_i + \varphi$$

(Mathematical Formula 1)

In addition, determination $X_i$ for the stakeholder corresponding to the node may be represented by following (mathematical formula 2). Note that $\gamma$ is a positive value designated in consideration of impact.

[Mathematical Formula 2]

$$X_i = \begin{cases} \gamma + 1 & \text{When Stakeholder Has Data and Data Is Related to AI Ethical Risk} \\ \gamma & \text{When Falling Outside Above} \end{cases}$$

$$(\text{Mathematical Formula 2})$$

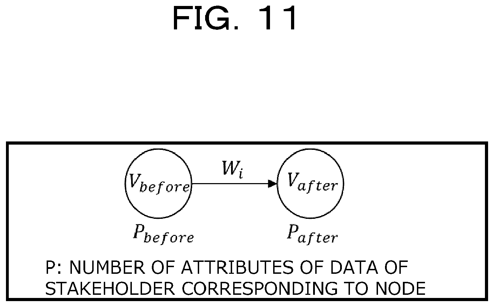

FIG. 11 is a second diagram explaining definitions of nodes and interactions according to the embodiment.

In the example illustrated in FIG. 11, the interaction from a node $V_{before}$ to a node $V_{after}$ is represented by $W_i$. In addition, the number of attributes of data of the stakeholders corresponding to the nodes $V_{before}$ and $V_{after}$ is represented by $P_{before}$ and $P_{after}$, respectively.

An indicator for one interaction $W_i$ may be represented by following (mathematical formula 3). Note that $S_i$ denotes a statistic.

[Mathematical Formula 3]

$$W_i = W_i^0 \times W_i^1 \times W_i^2 \times S_i \qquad (\text{Mathematical Formula 3})$$

The determination for the interaction may be conducted by following (mathematical formula 4). Note that $\alpha$ is designated in consideration of impact.

[Mathematical Formula 4]

$$W_i^0 = \begin{cases} \alpha + 1 & \text{Between Data Provider Nodes} \\ \alpha & \text{Other Than Between Data Provider Nodes} \end{cases}$$

$$(\text{Mathematical Formula 4})$$

The type (number) of the inter-node attributes may be represented by following (mathematical formula 5).

[Mathematical Formula 5]

$$W_i^1 = \left( \frac{P_{after}}{(P_{after} - P_{before})} \right) \qquad (\text{Mathematical Formula 5})$$

An inclusion relationship of attributes between nodes may be represented by following (mathematical formula 6).

[Mathematical Formula 6]

$$W_i^2 = \begin{cases} \beta + 2 & \text{Attribute Value Is Included (Increase)} \\ \beta + 1 & \text{Attribute Values Are Same} \\ \beta & \text{Attribute Values Are Different} \end{cases}$$

$$(\text{Mathematical Formula 6})$$

The statistic between nodes may be represented by following (mathematical formula 7) in a case other than binary values, and may be represented by following (mathematical formula 8) in a case of binary values $(a_0, b_0)$ and $(a_1, b_1)$. Note that M denotes the total number in $V_{before}$ and may be represented as $M = a_0 + b_0$, and N denotes the total number in $V_{after}$ and may be represented as $N = a_1 + b_1$.

[Mathematical Formula 7]

$$S_i = S_{after} - S_{before} \quad \begin{cases} S_i = 1 \text{ When } S_{after} = S_{before} \text{ Holds} \\ S_i \text{ When } S_{after} \neq S_{before} \text{ Holds} \end{cases}$$

$$(\text{Mathematical Formula 7})$$

[Mathematical Formula 8]

$$S_i = 1/\left|\frac{a_1}{N} - \frac{a_0}{M}\right| \quad \begin{cases} S_i = 1 \text{ When } a_0 = a_1 \text{ Holds} \\ S_i \text{ When } a_0 \neq a_1 \text{ Holds} \end{cases}$$

$$(\text{Mathematical Formula 8})$$

For the statistics between nodes in a case other than binary values, $S_{before}$ and $S_{after}$ may be represented by following (mathematical formula 9) and (mathematical formula 10), respectively.
[Mathematical Formula 9] [0154]

$$S_{before} = \frac{1}{M}\sum_{i}^{M}(x_i - \bar{x})^2$$

$$(\text{Mathematical Formula 9})$$

[Mathematical Formula 10]

$$S_{after} = \frac{1}{N}\sum_{i}^{N}(x_i - \bar{x})^2$$

$$(\text{Mathematical Formula 10})$$

In (mathematical formula 7) described above, the difference between the respective values of the variances at the preceding and subsequent nodes is assumed as an indicator. When the variances are the same (= no change), the difference is one, which is the same as the difference in a case where the difference is one. However, in reality, the difference is hardly one, and thus the difference may be assumed to be one when the difference is zero.
In the statistics between nodes in the case of binary values, from the viewpoint of AI ethics, closer values of two elements that one node has give more fairness, and a larger change in these values between nodes gives a higher risk. In the case of binary values, it is even sufficient to simply watch a change of one value with respect to the whole.
For example, in a case where $a_0$ denotes male, $b_0$ denotes female, before($a_0$, $b_0$) = (2, 12) holds, and after($a_1$, $b_1$) = (8, 23) holds, the value of following (mathematical formula 11) is computed when above-described (mathematical formula 8) is applied.
[Mathematical Formula 11]

$$1/\left|\frac{8}{31} - \frac{2}{14}\right| = 1/\left|\frac{8 \times 14 - 2 \times 31}{31 \times 14}\right| = 8.68$$

$$(\text{Mathematical Formula 11})$$

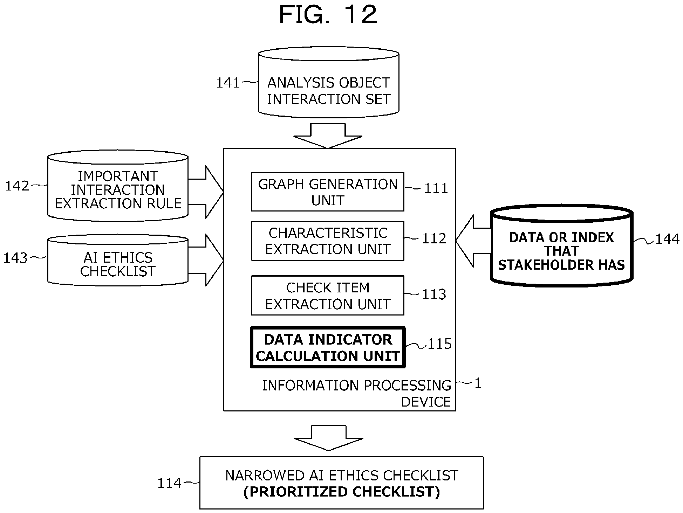

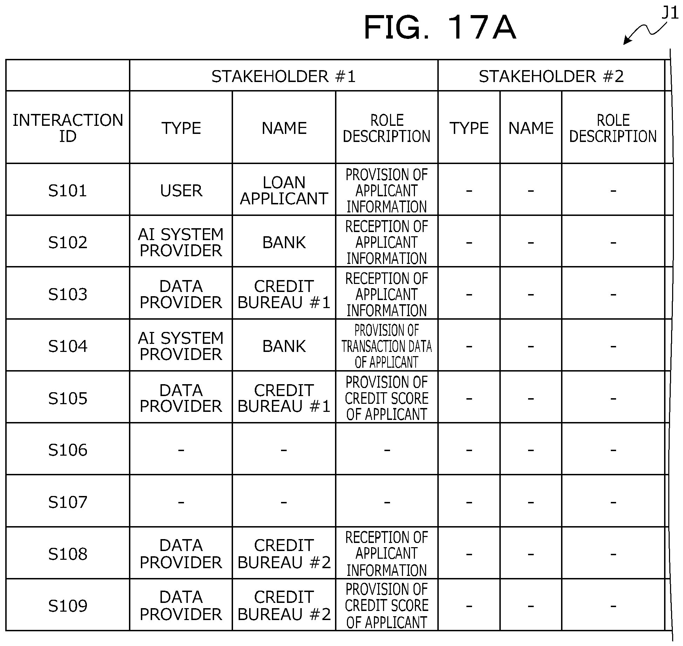

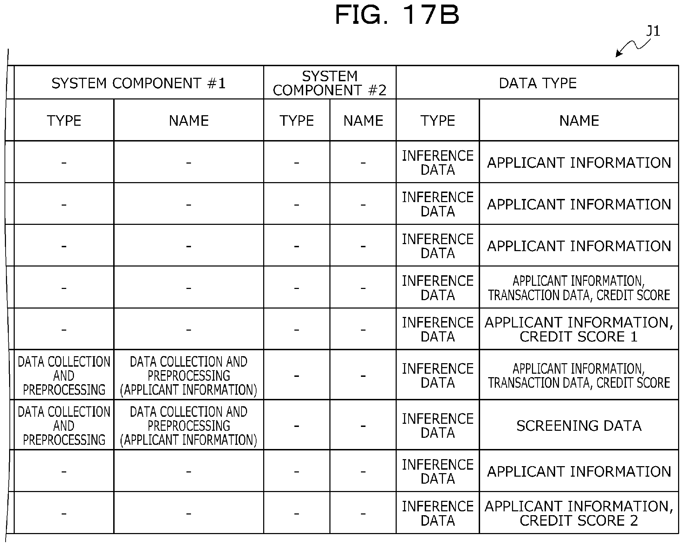

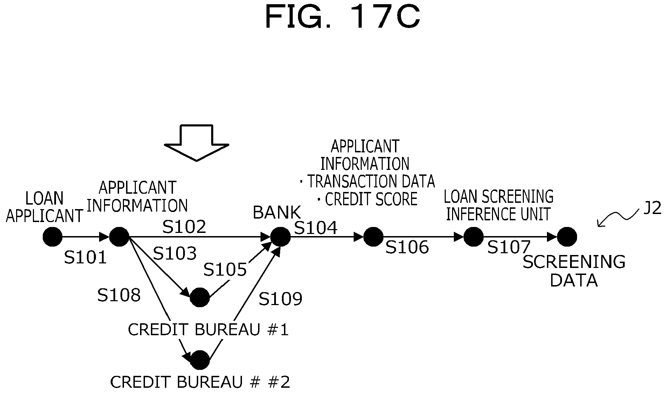

FIG. 12 is a block diagram schematically illustrating a software configuration example of the information processing device 1 according to the embodiment.
The information processing device 1 according to the embodiment functions as a graph generation unit 111, a characteristic extraction unit 112, a check item extraction unit 113, and a data indicator calculation unit 115.
The graph generation unit 111 acquires a plurality of pieces of relational information (in other words, interactions) including at least two attributes among an attribute of a class of an object person, an attribute of a class of processing, and an attribute of a class of data, which are determined based on the configuration of the AI system 100. The graph generation unit 111 may generate a graph structure to be described later with reference to FIGs. 14 and 17 and the like, based on the acquired relational information.

The data indicator calculation unit 115 calculates the indicator value for data or an index 144 that a stakeholder has, according to a change in features of the data.

The characteristic extraction unit 112 extracts a characteristic according to the role of the node and the indicator value from the graph structure and extracts an interaction to pay attention to, from among the extracted characteristics, based on an important interaction extraction rule 142. That is, the characteristic extraction unit 112 specifies the relational information related to merging from index information on the data correlated with each of the plurality of pieces of relational information and enhances the priority.

The check item extraction unit 113 outputs one or a plurality of check items selected based on the priority designated by the characteristic extraction unit 112 from among a plurality of AI ethics check items each associated with an attribute, as a narrowed (in other words, prioritized) AI ethics checklist 143 of the AI system 100.

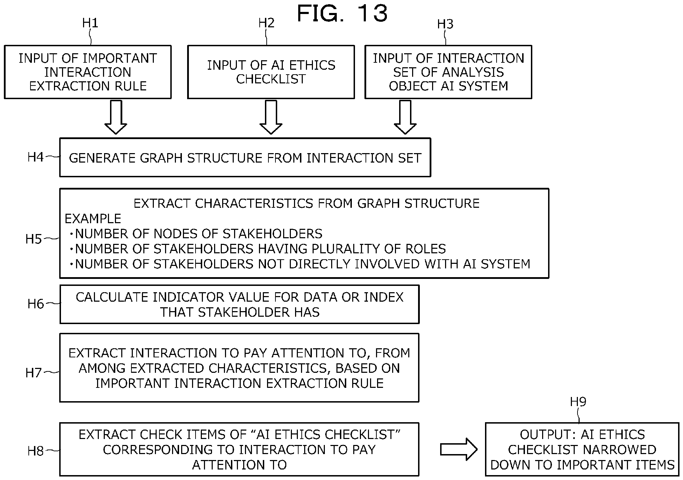

Details of the generation process for the AI ethics checklist 143 according to the embodiment will be described with reference to the flowchart (steps H1 to H9) illustrated in FIG. 13.

The graph generation unit 111 accepts the important interaction extraction rule 142, the AI ethics checklist 143, and an analysis object interaction set 141 as input data (steps H1 to H3).

The graph generation unit 111 generates the graph structure from the interaction set 141 (step H4).

The characteristic extraction unit 112 extracts characteristics from the graph structure (step H5). The extraction of characteristics may be executed based on the number of nodes of the stakeholders, the number of stakeholders having a plurality of roles, and the number of stakeholders not directly involved with the AI system 100, for example.

The data indicator calculation unit 115 calculates the indicator value for the data or the index 144 that a stakeholder has (step H6).

The characteristic extraction unit 112 extracts an interaction to pay attention to, from among the extracted characteristics, based on the important interaction extraction rule 142 (step H7).

The check item extraction unit 113 extracts the check items of the AI ethics checklist 143 corresponding to the interaction to pay attention to (step H8).

The check item extraction unit 113 outputs the AI ethics checklist 143 narrowed down to important items (step H9). Then, the generation process for the AI ethics checklist 143 ends.

FIG. 14 (i.e., FIGs. 14A and 14B) is a diagram explaining a first example of a generation process for a graph structure from an analysis sheet according to the embodiment.

The analysis sheet indicated by the reference sign I1 is generated from the system diagram of the AI system 100 illustrated in FIG. 1.

In the analysis sheet indicated by the reference sign I1, the type, name, role description, distinction between the start point and the end point of the stakeholders, and the type, name, distinction between the start point and the end point, and the like of the data are associated with each other for each interaction ID.

For example, the interaction ID "S101" is associated with the type "user", the name "loan applicant", and the role description "provision of applicant information" of a stakeholder. In addition, the interaction ID "S101" is associated with the data type "inference result" and the data name "applicant information".

A graph structure as indicated by the reference sign I2 may be generated from the analysis sheet (in other words, the system diagram of the AI system 100 and the AI ethics model) indicated by the reference sign I1.

In the graph structure indicated by the reference sign I2, an arrow between separate nodes indicated by the circle marks represents an interaction.

In the example illustrated in FIG. 14, the output of the applicant information from the loan applicant is represented by S101, the input of the applicant information to the bank is represented by S102, and the input of the applicant information to the credit bureau is represented by S103. In addition, the output of the applicant information, transaction data, and credit score from the bank is represented by S104, and the output of the applicant information, transaction data, and credit score from the credit bureau is represented by S105. Furthermore, the input of the applicant information, transaction data, and credit score to a loan screening inference unit is represented by S106, and the output of screening data from the loan screening inference unit is represented by S107.

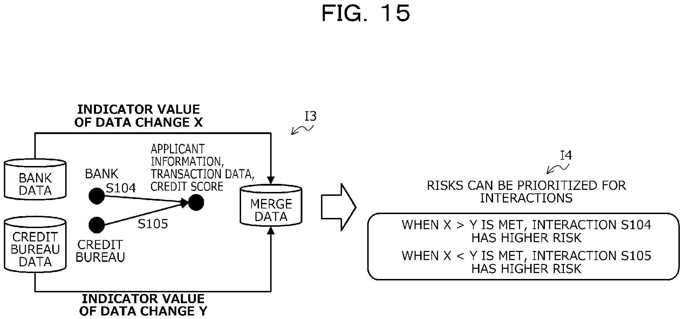

FIG. 15 is a diagram explaining a first example of prioritization of risks for interactions according to the embodiment.

In the graph structure indicated by the reference sign I2 in FIG. 14, the interactions S104 and S105, which are the input of the applicant information, transaction data, and credit score to the AI system 100 from the bank and the credit bureau, are extracted and indicated by the reference sign I3.

In the reference sign I3, the indicator value of data change in bank data input to the AI system 100 from the bank is represented by X, and the indicator value of data change in credit bureau data input to the AI system 100 from the credit bureau is represented by Y. Then, the bank data and the credit bureau data are merged into merge data (in other words, the applicant information, transaction data, and credit score).

As indicated by the reference sign I4, when X > Y is met, it is determined that the risk of the interaction S104 is higher than the risk of the interaction S105, and when X < Y is met, it is determined that the risk of the interaction S105 is higher than the risk of the interaction S104.

Note that, in the case of X = 0 and Y = 0, since the data is merged merely by aggregation, which includes no change in features of the data, it is determined that there is no risk based on the data.

In this manner, the risk can be prioritized for the interaction from the indicator value of data change.

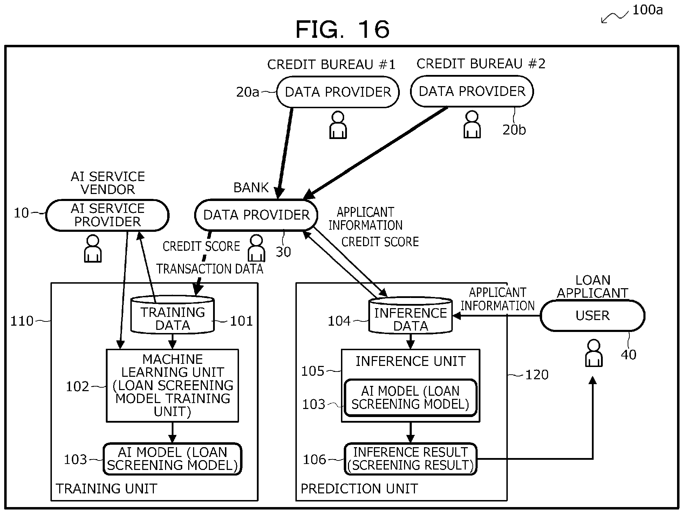

FIG. 16 is a block diagram illustrating a second example of an analysis object system diagram according to the embodiment.

An AI system 100a illustrated in FIG. 16 has interactions of loan screening AI similarly to the AI system 100 illustrated in FIG. 1, but the flow of data is different.

In the AI system 100a illustrated in FIG. 16, since a plurality of credit bureaus (in other words, data providers 20a and 20b) is used, there is a plurality of sources of provision of credit information data, and the data has to be merged. Transaction data and the like are once aggregated at the bank and provided to the AI system 100a (in other words, an AI service vendor). In the bank, it is possible that information preferred to be screened may have been added or information may have been increased for use in testing.

As a result of increasing the number of information sources to enhance the accuracy of the credit information, the credit information is aggregated at the bank, and there is a possibility that the AI ethical risk due to the aggregation may rise.

FIG. 17 (i.e., FIGs. 17A, 17B, and 17C) is a diagram explaining a second example of a generation process for a graph structure from an analysis sheet according to the embodiment.

The analysis sheet indicated by the reference sign J1 is generated from the system diagram of the AI system 100a illustrated in FIG. 16.

A graph structure as indicated by the reference sign J2 may be generated from the analysis sheet (in other words, the system diagram of the AI system 100a and the AI ethics model) indicated by the reference sign J1.

In the example illustrated in FIG. 17, the output of the applicant information from the loan applicant is represented by S101, the input of the applicant information to the bank is represented by S102, the input of the applicant information to the credit bureau #1 is represented by S103, and the input of the applicant information to the credit bureau #2 is represented by S108. In addition, the input from the credit bureau #1 to the bank is represented by S105, the input from the credit bureau #2 to the bank is represented by S109, and the output of the applicant information, transaction data, and credit score from the bank is represented by S104. Furthermore, the input of the applicant information, transaction data, and credit score to a loan screening inference unit is represented by S106, and the output of screening data from the loan screening inference unit is represented by S107.

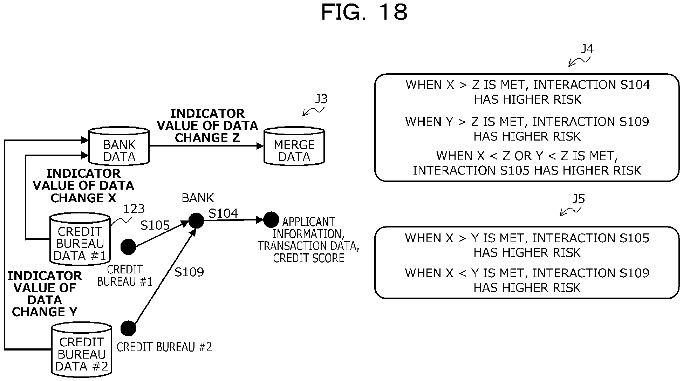

FIG. 18 is a diagram explaining a second example of prioritization of risks for interactions according to the embodiment.

In the graph structure indicated by the reference sign J2 in FIG. 17, the interactions S104, S105, and S109, which are the input to the bank from the credit bureaus #1 and #2 and the input of the applicant information, transaction data, and credit score to the AI system 100a from the bank, are extracted and indicated by the reference sign J3.

In the reference sign 13, the indicator value of data change in credit bureau data #1 input to the bank from the credit bureau #1 is represented by X, and the indicator value of data change in credit bureau data #2 input to the bank from the credit bureau #2 is represented by Y. In addition, the indicator value of data change in bank data generated by the bank from the credit bureau data #1 and #2 is represented by Z. Then, the bank data input to the AI system 100a from the bank forms merge data (in other words, the applicant information, transaction data, and credit score).

As indicated by the reference sign 14, when X > Z is met, it is determined that the interaction S104 has a higher risk among the interactions S104, S105, and S109, and when Y > Z is met, it is determined that the interaction S109 has a higher risk among the interactions S104, S105, and S109. In addition, when X < Z or Y < Z is met, it is determined that the interaction S105 has a higher risk among the interactions S104, S105, and S109.

Note that, in the case of Z = 0, since the data is merged merely by aggregation, which includes no change in features of the data, it is determined that there is no risk based on the data.

As indicated by the reference sign 15, when X > Y is met, it is determined that the risk of the interaction S105 is higher than the risk of the interaction S109, and when X < Y is met, it is determined that the risk of the interaction S109 is higher than the risk of the interaction S105.

Note that, when the indicator values are the same, the priority of the data at the origin may be set to be higher.

FIG. 19 is a block diagram schematically illustrating a hardware configuration example of the information processing device 1 according to the embodiment.

As illustrated in FIG. 19, the information processing device 1 includes a central processing unit (CPU) 11, a memory unit 12, a display control unit 13, a storage device 14, an input interface (IF) 15, an external recording medium processing unit 16, and a communication IF 17.

The memory unit 12 is an example of a storage unit and illustratively, includes a read only memory (ROM), a random access memory (RAM), and the like. Programs such as a basic input/output system (BIOS) may be written in the ROM of the memory unit 12. A software program in the memory unit 12 may be read and executed by the CPU 11 as appropriate. In addition, the RAM of the memory unit 12 may be used as a temporary recording memory or a working memory.

The display control unit 13 is coupled to a display device 131 and controls the display device 131. The display device 131 is a liquid crystal display, an organic light-emitting diode (OLED) display, a cathode ray tube (CRT), an electronic paper display, or the like and displays various types of information for an operator or the like. The display device 131 may be combined with an input device and may be, for example, a touch panel. The display device 131 displays various types of information for a user of the information processing device 1.

The storage device 14 is a storage device having high input/output (IO) performance, and for example, a dynamic random access memory (DRAM), a solid state drive (SSD), a storage class memory (SCM), and a hard disk drive (HDD) may be used.

The input IF 15 may be coupled to an input device such as a mouse 151 or a keyboard 152 and may control the input device such as the mouse 151 or the keyboard 152. The mouse 151 and the keyboard 152 are examples of the input devices, and an operator performs various types of input operations via these input devices.

The external recording medium processing unit 16 is configured in such a manner that a recording medium 160 can be attached to the external recording medium processing unit 16. The external recording medium processing unit 16 is configured in such a manner that information recorded in the recording medium 160 can be read in a state with the recording medium 160 attached. In the present example, the recording medium 160 is portable. For example, the recording medium 160 is a flexible disk, an optical disc, a magnetic disk, a magneto-optical disk, a semiconductor memory, or the like.

The communication IF 17 is an interface for enabling communication with an external device.

The CPU 11 is an example of a processor and is a processing device that performs various controls and arithmetic operations. The CPU 11 achieves various functions by executing an operating system (OS) or a program read into the memory unit 12. Note that the CPU 11 may be a multiprocessor including a plurality of CPUs, or a multi-core processor having a plurality of CPU cores, or may have a configuration having a plurality of multi-core processors.

A device for controlling operation of the entire information processing device 1 is not limited to the CPU 11 and may be, for example, any one of an MPU, a DSP, an ASIC, a PLD, or an FPGA. In addition, the device for controlling operation of the entire information processing device 1 may be a combination of two or more types of the CPU, MPU, DSP, ASIC, PLD, and FPGA. Note that the MPU is an abbreviation for a micro processing unit, the DSP is an abbreviation for a digital signal processor, and the ASIC is an abbreviation for an application specific integrated circuit. In addition, the PLD is an abbreviation for a programmable logic device, and the FPGA is an abbreviation for a field programmable gate array.

[C] Effects

According to the AI system check program, the AI system check method, and the information processing device 1 according to the above-described embodiments, for example, the following actions and effects may be obtained.

The graph generation unit 111 acquires a plurality of pieces of relational information (in other words, interactions) including at least two attributes among an attribute of a class of an object person, an attribute of a class of processing, and an attribute of a class of data, which are determined based on the configuration of the AI system 100. The data indicator calculation unit 115 designates the priority of the plurality of pieces of relational information, based on whether or not each of the plurality of pieces of relational information is correlated with data merging. The check item extraction unit 113 outputs one or a plurality of check items selected based on the designated priority from among a plurality of check items each associated with an attribute, as a narrowed AI ethics checklist 114 of the AI system 100.

This may support a developer and a provider of the AI system 100 in appropriately recognizing and dealing with ethical risks that can arise from servicing of the AI system 100. Specifically, the work expected for a provider and a developer of the AI system 100 to sort out items supposed to be practiced for components of the AI system 100 and individual stakeholders may be removed. In addition, by statistically prioritizing the checklist with about 300 items and analyzing the top N important items (for example, N = 20) on a priority basis, a serious risk may be recognized at an early stage, and the efficiency of drafting a risk measure for the AI system 100 may be significantly improved.

[D] Others

The disclosed technique is not limited to the above-described embodiments, and various modifications can be made and carried out in a range without departing from the spirit of the present embodiments. Each configuration and each process of the present embodiments may be selected or omitted as desired, or may be combined as appropriate.

**Claims**

1. An artificial intelligence(AI) system check program comprising instructions which when executed by a computer, cause the computer to execute processing comprising:

   acquiring a plurality of pieces of relational information that each includes at least two attributes among the attributes of a class of an object person, the attributes of the class of processing, and the attributes of the class of data, in which the relational information is determined based on a configuration of an AI system;
   designating priority of the plurality of pieces of relational information, based on whether or not each of the plurality of pieces of relational information is correlated with merging of the data; and
   outputting one or a plurality of check items selected based on the designated priority from among a plurality of check items each associated with the attributes, as a checklist for the AI system.

2. The artificial intelligence(AI) system check program according to claim 1, wherein
   the designating of the priority includes raising the priority of the relational information correlated with the merging of the data among the plurality of pieces of relational information.

3. The artificial intelligence(AI) system check program according to claim 1 or 2, wherein
   the designating of the priority is executed for the relational information correlated with the merging of the data, by raising the priority higher for first data and second data as objects to be merged, when elements of the first data are in an inclusion relationship with the elements of the second data than when the elements of the first data and the elements of the second data are the same or the elements of the first data and the elements of the second data do not overlap at all.

4. The artificial intelligence(AI) system check program according to claim 3, wherein
   the designating of the priority is executed for the relational information correlated with the merging of the data, by raising the priority higher when the elements of the first data and the elements of the second data are the same than when the elements of the first data and the elements of the second data do not overlap at all.

5. The artificial intelligence(AI) system check program according to claim 1 or 2, wherein
   the designating of the priority is executed based on the attributes of the class of the object person.

6. An artificial intelligence(AI) system check method implemented by a computer, the method comprising:

   acquiring a plurality of pieces of relational information that each includes at least two attributes among the attributes of a class of an object person, the attributes of the class of processing, and the attributes of the class of data, in which the relational information is determined based on a configuration of an AI system;
   designating priority of the plurality of pieces of relational information, based on whether or not each of the plurality of pieces of relational information is correlated with merging of the data; and
   outputting one or a plurality of check items selected based on the designated priority from among a plurality of check items each associated with the attributes, as a checklist for the AI system.

7. An information processing apparatus comprising a processor configured to perform processing including:

   acquiring a plurality of pieces of relational information that each includes at least two attributes among the attributes of a class of an object person, the attributes of the class of processing, and the attributes of the class of data, in which the relational information is determined based on a configuration of an AI system;
   designating priority of the plurality of pieces of relational information, based on whether or not each of the plurality of pieces of relational information is correlated with merging of the data; and
   outputting one or a plurality of check items selected based on the designated priority from among a plurality of check items each associated with the attributes, as a checklist for the AI system.

## FIG. 1

# FIG. 2A

A1

| INTERACTION ID | STAKEHOLDER #1 | | | | STAKEHOLDER #2 | | | |
|---|---|---|---|---|---|---|---|---|
| | TYPE | NAME | ROLE DESCRIPTION | START POINT (0)/END POINT (1) | TYPE | NAME | ROLE DESCRIPTION | START POINT (0)/END POINT (1) |
| S101 | USER | LOAN APPLICANT | PROVISION OF APPLICANT INFORMATION | 0 | - | - | - | - |
| S102 | AI SYSTEM PROVIDER | BANK | RECEPTION OF APPLICANT INFORMATION | 1 | - | - | - | - |
| S103 | DATA PROVIDER | CREDIT BUREAU | RECEPTION OF APPLICANT INFORMATION | 1 | - | - | - | - |
| S104 | AI SYSTEM PROVIDER | BANK | PROVISION OF TRANSACTION DATA OF APPLICANT | 0 | - | - | - | - |
| S105 | DATA PROVIDER | CREDIT BUREAU | PROVISION OF CREDIT SCORE OF APPLICANT | 0 | - | - | - | - |
| S106 | - | - | - | - | - | - | - | - |
| S107 | - | - | - | - | - | - | - | - |

ROLE ~ A11

A2

# FIG. 2B

A1

| SYSTEM COMPONENT #1 | | | SYSTEM COMPONENT #2 | | | TYPE OF DATA | | |
|---|---|---|---|---|---|---|---|---|
| TYPE | NAME | START POINT (0)/END POINT (1) | TYPE | NAME | START POINT (0)/END POINT (1) | TYPE | NAME | START POINT (0)/END POINT (1) |
| - | - | - | - | - | - | INFERENCE DATA | APPLICANT INFORMATION, TRANSACTION DATA, CREDIT SCORE | 1 |
| - | - | - | - | - | - | INFERENCE DATA | APPLICANT INFORMATION, TRANSACTION DATA, CREDIT SCORE | 0 |
| - | - | - | - | - | - | INFERENCE DATA | APPLICANT INFORMATION, TRANSACTION DATA, CREDIT SCORE | 0 |
| - | - | - | - | - | - | INFERENCE DATA | APPLICANT INFORMATION, TRANSACTION DATA, CREDIT SCORE | 1 |
| - | - | - | - | - | - | INFERENCE DATA | APPLICANT INFORMATION, TRANSACTION DATA, CREDIT SCORE | 1 |
| AI MODEL | LOAN SCREENING INFERENCE UNIT | 1 | - | - | - | INFERENCE DATA | APPLICANT INFORMATION, TRANSACTION DATA, CREDIT SCORE | 0 |
| AI MODEL | LOAN SCREENING INFERENCE UNIT | 0 | - | - | - | INFERENCE RESULT | SCREENING RESULT | 1 |

# FIG. 3

141 — ANALYSIS OBJECT INTERACTION SET

INFORMATION PROCESSING DEVICE ~6

GRAPH GENERATION UNIT ~111

142 — IMPORTANT INTERACTION EXTRACTION RULE

CHARACTERISTIC EXTRACTION UNIT ~112

143 — AI ETHICS CHECKLIST

CHECK ITEM EXTRACTION UNIT ~113

114 — NARROWED AI ETHICS CHECKLIST

# FIG. 4

SYSTEM DIAGRAM — B1

CHECKLIST — B2

ASSIGN ROLE ACCORDING TO AI ETHICS MODE — B3

INPUT

FORM INTO GRAPH STRUCTURE — B4

ASSIGN PRIORITY TO INTERACTION ACCORDING TO ROLE OF NODE IN GRAPH — B5

PRIORITIZED CHECKLIST — OUTPUT — B6

# FIG. 5

C1

| INPUT OF IMPORTANT INTERACTION EXTRACTION RULE |

C2

| INPUT OF AI ETHICS CHECKLIST |

C3

| INPUT OF INTERACTION SET OF ANALYSIS OBJECT AI SYSTEM |

C4 — | GENERATE GRAPH STRUCTURE FROM INTERACTION SET |

C5 —

EXTRACT CHARACTERISTICS FROM GRAPH STRUCTURE
EXAMPLE
・NUMBER OF NODES OF STAKEHOLDERS
・NUMBER OF STAKEHOLDERS HAVING PLURALITY OF ROLES
・NUMBER OF STAKEHOLDERS NOT DIRECTLY INVOLVED WITH AI SYSTEM

C6 —

EXTRACT INTERACTION TO PAY ATTENTION TO, FROM
AMONG EXTRACTED CHARACTERISTICS, BASED ON
"RULE OF INTERACTION TO PAY ATTENTION TO"

C8

C7 —

EXTRACT CHECK ITEMS OF "AI ETHICS CHECKLIST"
CORRESPONDING TO INTERACTION TO PAY
ATTENTION TO

| OUTPUT: AI ETHICS CHECKLIST NARROWED DOWN TO IMPORTANT ITEMS |

# FIG. 6

SYSTEM DIAGRAM — D1

CHECKLIST — D2

ASSIGN ROLE ACCORDING TO AI ETHICS MODEL — D3

INPUT

FORM INTO GRAPH STRUCTURE — D4

ASSIGN PRIORITY ACCORDING TO ROLE OF NODE IN GRAPH AND CHANGES IN FEATURES OF DATA — D5

PRIORITIZED CHECKLIST — OUTPUT — D6

# FIG. 7

**DATA IS MERGED AT TIME OF INPUT TO SYSTEM** E1

WHEN PLURALITY OF PIECES OF DATA IS DIRECTLY INPUT TO AI SYSTEM FROM DATA OWNERS

Data1

Data1
Data2 100

Data2

AI SYSTEM

CHARACTERISTICS OF DATA CHANGE

**DATA IS MERGED BY INTERPOSING STAKEHOLDER HAVING PARTICULAR INTENTION** E2

WHEN PLURALITY OF PIECES OF DATA IS INPUT THROUGH PLURALITY OF DATA OWNERS

Data1
Data2 → Data3

Data3

Data1

AI SYSTEM

CHARACTERISTICS OF DATA CHANGE 100

E3 — QUALITATIVELY; AI ETHICAL RISK INCREASES

E31 — IT IS DIFFICULT TO CONCLUDE WHICH ONE HAS HIGHER RISK (= HIGHER PRIORITY) IN RELATED EXAMPLE

DATA PATH (SEQUENCE) AND DATA CHANGE ARE RELATED TO AI ETHICAL RISK

E21

## FIG. 8

**DATA IS MERGED AT TIME OF INPUT TO SYSTEM** F1

WHEN PLURALITY OF PIECES OF DATA IS DIRECTLY INPUT TO AI SYSTEM FROM DATA OWNERS

Data1

Data1
Data2

AI SYSTEM    100

Data2

CHARACTERISTICS OF DATA CHANGE

**DATA IS MERGED BY INTERPOSING STAKEHOLDER HAVING PARTICULAR INTENTION** F2

WHEN PLURALITY OF PIECES OF DATA IS INPUT THROUGH PLURALITY OF DATA OWNERS

Data1

Data1
Data2    Data3    Data3

100

AI SYSTEM

CHARACTERISTICS OF DATA CHANGE    CHARACTERISTICS OF DATA CHANGE

F31 — QUALITATIVELY; AI ETHICAL RISK INCREASES

F32 — QUANTITATIVELY; AI ETHICAL RISK INCREASES

# FIG. 9

LOW AI
ETHICAL RISK

HIGH AI
ETHICAL RISK

G1

**CASE OF NO OVERLAP
AT ALL**     <     **CASE OF BEING SAME**     <

G2

G3

**CASE OF BEING IN
INCLUSION RELATIONSHIP**

| GENDER | RACE |
| GENDER | RACE |
| AGE | OCCUPATION |

| GENDER | RACE |
| GENDER | RACE |

| GENDER | RACE |
| GENDER | RACE | AGE |

# FIG. 10

P: NUMBER OF ATTRIBUTES OF DATA OF
STAKEHOLDER CORRESPONDING TO NODE

# FIG. 11

$$W_i$$

$V_{before}$ → $V_{after}$

$P_{before}$ $P_{after}$

P: NUMBER OF ATTRIBUTES OF DATA OF
STAKEHOLDER CORRESPONDING TO NODE

# FIG. 12

141 — ANALYSIS OBJECT INTERACTION SET

142 — IMPORTANT INTERACTION EXTRACTION RULE

143 — AI ETHICS CHECKLIST

GRAPH GENERATION UNIT — 111

CHARACTERISTIC EXTRACTION UNIT — 112

CHECK ITEM EXTRACTION UNIT — 113

**DATA INDICATOR CALCULATION UNIT** — 115

INFORMATION PROCESSING DEVICE — 1

**DATA OR INDEX THAT STAKEHOLDER HAS** — 144

114 — NARROWED AI ETHICS CHECKLIST **(PRIORITIZED CHECKLIST)**

# FIG. 13

H1

INPUT OF IMPORTANT
INTERACTION
EXTRACTION RULE

H2

INPUT OF AI ETHICS
CHECKLIST

H3

INPUT OF INTERACTION
SET OF ANALYSIS
OBJECT AI SYSTEM

H4 — GENERATE GRAPH STRUCTURE FROM INTERACTION SET

H5 —
EXTRACT CHARACTERISTICS FROM GRAPH STRUCTURE
EXAMPLE
·NUMBER OF NODES OF STAKEHOLDERS
·NUMBER OF STAKEHOLDERS HAVING PLURALITY OF ROLES
·NUMBER OF STAKEHOLDERS NOT DIRECTLY INVOLVED WITH AI SYSTEM

H6 — CALCULATE INDICATOR VALUE FOR DATA OR INDEX
THAT STAKEHOLDER HAS

H7 —
EXTRACT INTERACTION TO PAY ATTENTION TO, FROM
AMONG EXTRACTED CHARACTERISTICS, BASED ON
IMPORTANT INTERACTION EXTRACTION RULE

H8 —
EXTRACT CHECK ITEMS OF "AI ETHICS CHECKLIST"
CORRESPONDING TO INTERACTION TO PAY
ATTENTION TO

H9

OUTPUT: AI ETHICS
CHECKLIST NARROWED
DOWN TO IMPORTANT ITEMS

# FIG. 14A

I1

| INTERACTION ID | STAKEHOLDER #1 | | | STAKEHOLDER #2 | | |
|---|---|---|---|---|---|---|
| | TYPE | NAME | ROLE DESCRIPTION | TYPE | NAME | ROLE DESCRIPTION |
| S101 | USER | LOAN APPLICANT | PROVISION OF APPLICANT INFORMATION | - | - | - |
| S102 | AI SYSTEM PROVIDER | BANK | RECEPTION OF APPLICANT INFORMATION | - | - | - |
| S103 | DATA PROVIDER | CREDIT BUREAU | RECEPTION OF APPLICANT INFORMATION | - | - | - |
| S104 | AI SYSTEM PROVIDER | BANK | PROVISION OF TRANSACTION DATA OF APPLICANT | - | - | - |
| S105 | DATA PROVIDER | CREDIT BUREAU | PROVISION OF CREDIT SCORE OF APPLICANT | - | - | - |
| S106 | - | - | - | - | - | - |
| S107 | - | - | - | - | - | - |

I2

GRAPH STRUCTURE EXTRACTED FROM SYSTEM DIAGRAM AND AI ETHICS MODEL

# FIG. 14B

I1

| SYSTEM COMPONENT #1 | | SYSTEM COMPONENT #2 | | TYPE OF DATA | |
|---|---|---|---|---|---|
| TYPE | NAME | TYPE | NAME | TYPE | NAME |
| - | - | - | - | INFERENCE DATA | APPLICANT INFORMATION |
| - | - | - | - | INFERENCE DATA | APPLICANT INFORMATION |
| - | - | - | - | INFERENCE DATA | APPLICANT INFORMATION |
| - | - | - | - | INFERENCE DATA | TRANSACTION DATA OF APPLICANT |
| - | - | - | - | INFERENCE DATA | CREDIT SCORE OF APPLICANT |
| DATA COLLECTION AND PREPROCESSING | DATA COLLECTION AND PREPROCESSING (APPLICANT INFORMATION) | - | - | INFERENCE DATA | APPLICANT INFORMATION, TRANSACTION DATA, CREDIT SCORE |
| DATA COLLECTION AND PREPROCESSING | DATA COLLECTION AND PREPROCESSING (APPLICANT INFORMATION) | - | - | INFERENCE DATA | SCREENING DATA |

# FIG. 15

INDICATOR VALUE
OF DATA CHANGE X

I3

BANK
DATA

CREDIT
BUREAU
DATA

BANK
S104

CREDIT
BUREAU
S105

APPLICANT
INFORMATION,
TRANSACTION DATA,
CREDIT SCORE

MERGE
DATA

INDICATOR VALUE
OF DATA CHANGE Y

I4

RISKS CAN BE PRIORITIZED FOR
INTERACTIONS

WHEN X > Y IS MET, INTERACTION S104
HAS HIGHER RISK

WHEN X < Y IS MET, INTERACTION S105
HAS HIGHER RISK

## FIG. 16

# FIG. 17A

J1

| INTERACTION ID | STAKEHOLDER #1 | | | STAKEHOLDER #2 | | |
|---|---|---|---|---|---|---|
| | TYPE | NAME | ROLE DESCRIPTION | TYPE | NAME | ROLE DESCRIPTION |
| S101 | USER | LOAN APPLICANT | PROVISION OF APPLICANT INFORMATION | - | - | - |
| S102 | AI SYSTEM PROVIDER | BANK | RECEPTION OF APPLICANT INFORMATION | - | - | - |
| S103 | DATA PROVIDER | CREDIT BUREAU #1 | RECEPTION OF APPLICANT INFORMATION | - | - | - |
| S104 | AI SYSTEM PROVIDER | BANK | PROVISION OF TRANSACTION DATA OF APPLICANT | - | - | - |
| S105 | DATA PROVIDER | CREDIT BUREAU #1 | PROVISION OF CREDIT SCORE OF APPLICANT | - | - | - |
| S106 | - | - | - | - | - | - |
| S107 | - | - | - | - | - | - |
| S108 | DATA PROVIDER | CREDIT BUREAU #2 | RECEPTION OF APPLICANT INFORMATION | - | - | - |
| S109 | DATA PROVIDER | CREDIT BUREAU #2 | PROVISION OF CREDIT SCORE OF APPLICANT | - | - | - |

# FIG. 17B

J1

| SYSTEM COMPONENT #1 | | SYSTEM COMPONENT #2 | | DATA TYPE | |
|---|---|---|---|---|---|
| TYPE | NAME | TYPE | NAME | TYPE | NAME |
| - | - | - | - | INFERENCE DATA | APPLICANT INFORMATION |
| - | - | - | - | INFERENCE DATA | APPLICANT INFORMATION |
| - | - | - | - | INFERENCE DATA | APPLICANT INFORMATION |
| - | - | - | - | INFERENCE DATA | APPLICANT INFORMATION, TRANSACTION DATA, CREDIT SCORE |
| - | - | - | - | INFERENCE DATA | APPLICANT INFORMATION, CREDIT SCORE 1 |
| DATA COLLECTION AND PREPROCESSING | DATA COLLECTION AND PREPROCESSING (APPLICANT INFORMATION) | - | - | INFERENCE DATA | APPLICANT INFORMATION, TRANSACTION DATA, CREDIT SCORE |
| DATA COLLECTION AND PREPROCESSING | DATA COLLECTION AND PREPROCESSING (APPLICANT INFORMATION) | - | - | INFERENCE DATA | SCREENING DATA |
| - | - | - | - | INFERENCE DATA | APPLICANT INFORMATION |
| - | - | - | - | INFERENCE DATA | APPLICANT INFORMATION, CREDIT SCORE 2 |

# FIG. 17C

FIG. 18

J4

WHEN X > Z IS MET, INTERACTION S104
HAS HIGHER RISK

WHEN Y > Z IS MET, INTERACTION S109
HAS HIGHER RISK

WHEN X < Z OR Y < Z IS MET,
INTERACTION S105 HAS HIGHER RISK

J5

WHEN X > Y IS MET, INTERACTION S105
HAS HIGHER RISK

WHEN X < Y IS MET, INTERACTION S109
HAS HIGHER RISK

**INDICATOR
VALUE OF DATA
CHANGE Z**

BANK
DATA

J3

MERGE
DATA

**INDICATOR
VALUE OF DATA
CHANGE X**

BANK

123

CREDIT
BUREAU
DATA #1

S105

S104

APPLICANT
INFORMATION,
TRANSACTION DATA,
CREDIT SCORE

CREDIT
BUREAU #1

S109

**INDICATOR
VALUE OF
DATA
CHANGE Y**

CREDIT
BUREAU
DATA #2

CREDIT BUREAU #2

## FIG. 19

INFORMATION PROCESSING DEVICE

131

1

14 STORAGE DEVICE

11 CPU

12 MEMORY UNIT

13 DISPLAY CONTROL UNIT

15 INPUT IF

16 EXTERNAL RECORDING MEDIUM PROCESSING UNIT

17 COMMUNICATION IF

151

152

160

TO EXTERNAL DEVICE

Europäisches
Patentamt
European
Patent Office
Office européen
des brevets

# EUROPEAN SEARCH REPORT

**Application Number**

EP 23 20 9001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/335340 A1 (MOUSTAFA HASSNAA [US] ET AL) 20 October 2022 (2022-10-20) * the whole document * | 1-7 | INV. G06N20/00 |
| A | WO 2021/025785 A1 (ACXIOM LLC [US]) 11 February 2021 (2021-02-11) * abstract * | 1-7 | |
| A | US 11 500 881 B1 (BENTLEY HADRIAN DAVID [US]) 15 November 2022 (2022-11-15) * abstract * | 1-7 | |
| A | US 2020/372374 A1 (SUN SHANGCHUAN [CN]) 26 November 2020 (2020-11-26) * abstract * | 1-7 | |
| A | US 2020/134440 A1 (ADIBOWO SASMITO [SG]) 30 April 2020 (2020-04-30) * abstract * | 1-7 | |

**TECHNICAL FIELDS SEARCHED (IPC)**

G06N

The present search report has been drawn up for all claims

| Place of search | Date of completion of the search | Examiner |
|---|---|---|
| Munich | 27 March 2024 | Weidmann, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 9001

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2024

| Patent document cited in search report | | Publication date | Patent family member(s) | | Publication date |
|---|---|---|---|---|---|
| US 2022335340 | A1 | 20-10-2022 | US | 2022335340 A1 | 20-10-2022 |
| | | | WO | 2023048747 A1 | 30-03-2023 |
| | | | WO | 2023048770 A1 | 30-03-2023 |
| WO 2021025785 | A1 | 11-02-2021 | AU | 2020326419 A1 | 14-10-2021 |
| | | | CA | 3131340 A1 | 11-02-2021 |
| | | | CN | 114041146 A | 11-02-2022 |
| | | | EP | 4010852 A1 | 15-06-2022 |
| | | | JP | 2022542634 A | 06-10-2022 |
| | | | US | 2021334329 A1 | 28-10-2021 |
| | | | US | 2023004616 A1 | 05-01-2023 |
| | | | WO | 2021025785 A1 | 11-02-2021 |
| US 11500881 | B1 | 15-11-2022 | US | 11500881 B1 | 15-11-2022 |
| | | | US | 2023030979 A1 | 02-02-2023 |
| US 2020372374 | A1 | 26-11-2020 | CN | 109564635 A | 02-04-2019 |
| | | | US | 2020372374 A1 | 26-11-2020 |
| | | | WO | 2019029061 A1 | 14-02-2019 |
| US 2020134440 | A1 | 30-04-2020 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021199201 A
- JP 2021057047 A
- US 20200097849 A

**Non-patent literature cited in the description**

- **MATSUMOTO, TAKASHI ; EMA, ARISA.** *Proposal of risk chain model to study risk reduction for AI services,* 04 June 2020